# FASCICULE DE BREVET EUROPEEN

(11) **EP 2 996 830 B1**
(45) Date de publication et mention de la délivrance du brevet: **10.05.2017**
(21) Numéro de dépôt: 14722698.9
(22) Date de dépôt: 15.04.2014
(51) Int. Cl.: B23D 61/18, B23D 65/00, B24D 18/00

(54) **FIL ABRASIF DE SCIAGE, PROCÉDÉ DE FABRICATION ET UTILISATION**
SCHLEIFSÄGEDRAHT, HERSTELLUNGSVERFAHREN DAFÜR UND VERWENDUNG DAVON
ABRASIVE SAWING WIRE, MANUFACTURING PROCESS AND USE

(30) Priorité: 14.05.2013 FR 1354311
(43) Date de publication de la demande: 23.03.2016
(73) Titulaire: Commissariat à l'Énergie Atomique et aux Énergies Alternatives, 75015 Paris (FR); THERMOCOMPACT, 74370 Metz Tessy (FR)
(72) Inventeur: LY, Michel, F-74000 Annecy (FR); SANCHEZ, Gérald, F-74230 Dingy Saint Clair (FR); WEBER, Xavier, F-74000 Annecy (FR)
(74) Mandataire: Cabinet Laurent & Charras
(86) Numéro de dépôt international: PCT/FR2014/050910
(87) Numéro de publication internationale: WO 2014/184456

(56) Documents cités:
- EP-A1- 2 277 660
- WO-A1-2010/125085
- US-A1- 2012 167 482

## Description

### DOMAINE DE L'INVENTION

L'invention concerne un fil abrasif comprenant une âme en acier et des particules abrasives maintenues sur l'âme par un liant à base de fer, son procédé de fabrication et son utilisation particulière.

Le domaine d'utilisation de la présente invention concerne notamment le sciage de matériaux tels que le silicium, le saphir, ou le carbure de silicium.

### ETAT ANTERIEUR DE LA TECHNIQUE

Le document WO 2010/125085 A1 divulgue un fil abrasif comprenant une âme en acier et un revêtement comprenant un liant et des particules abrasives, ledit liant étant constitué d'au moins une couche en alliage de fer contenant, en poids par rapport au poids du liant : entre 0 et 3% d'oxygène ainsi que l'élément phosphore issu de phosphates en proportion inconnue.

De manière générale, la découpe de matériaux durs tels que les wafers de silicium peut être réalisée au moyen d'un fil d'acier présentant à sa périphérie des particules abrasives (constituées de diamant par exemple).

Pour résoudre les éventuelles ruptures de fil, l'art antérieur préconise l'utilisation d'un fil en acier à forte teneur en carbone.

Les particules abrasives sont liées au fil au moyen d'une couche de liant en résine ou en métal. Ce liant maintient les particules à la surface du fil de manière à lui conférer des propriétés abrasives.

De manière générale, et contrairement au liant, les particules sont réalisées en un matériau plus dur que le matériau à découper.

En effet, lors de la première utilisation du fil, le liant est érodé en partie pour laisser apparaître les particules abrasives. Le sciage du matériau est alors réalisé par passages répétés du fil de découpe sur la surface du matériau à découper, c'est-à-dire par frottements des parties saillantes des particules abrasives sur le matériau.

Une fois les parties saillantes des particules abrasives exposées, le liant n'entre plus en contact direct avec le matériau à découper. Cependant, il peut s'user selon les deux mécanismes suivants :
- par déformation mécanique : lors du sciage d'un matériau, les particules abrasives sont poussées alternativement en avant et en arrière et selon la direction principale du fil. Ce mouvement est la directe conséquence du frottement avec le matériau en cours de découpe. Ainsi, le liant se déforme un peu à chaque mouvement. A l'issue de la découpe, le liant peut être localement trop déformé pour retenir efficacement les particules abrasives à la surface du fil.
- par abrasion/érosion : ce mécanisme résulte de la présence de fragments du matériau à découper se trouvant entre le liant - qui se déplace avec le fil - et le matériau à découper. En raison des mouvements de sciage, les fragments de matériau érodent le liant, avec pour conséquence une diminution progressive de son épaisseur. A l'issue de la découpe, le liant n'est plus assez épais pour retenir les particules abrasives à la surface du fil de manière efficace. Les particules abrasives se détachent, ce qui réduit progressivement le pouvoir abrasif du fil et donc son aptitude à découper un matériau.

De manière générale, la déformation mécanique est un phénomène plus important que l'abrasion du liant.

Afin de retarder, voire d'éliminer la détérioration des propriétés abrasives du fil, des liants à base d'alliages métalliques ont été développés. Ceux-ci s'avèrent présenter des propriétés de dureté supérieures à celles d'une résine.

Ainsi, pour limiter l'usure du fil, un liant à base d'un alliage de nickel et de phosphore peut être utilisé. Ce liant est déposé chimiquement à la surface du fil de manière à recouvrir des grains d'abrasifs. En outre, sa dureté est supérieure à celle du nickel pur.

Afin de limiter la fissuration de la couche de liaison, le document EP 2 428 317 préconise de limiter les teneurs en soufre, oxygène, et hydrogène dans le dépôt électrolytique de nickel.

D'autres solutions consistent à utiliser un liant en alliage cobalt/nickel. Or, le dépôt électrolytique de ce type d'alliage nickel/cobalt met en oeuvre des composés tels que le sulfate de nickel qui est cancérigène. En outre, le nickel métallique peut provoquer des allergies.

Les liants métalliques peuvent généralement se corroder au contact de l'eau qui est amenée dans la zone de découpe. Ce phénomène étant bien entendu néfaste à la durée de vie du fil abrasif, l'homme du métier cherche à éviter la corrosion du métal liant.

Le fil et le liant doivent donc répondre à certaines exigences.

De préférence, le liant ne doit pas se fissurer pendant l'usage du fil. Quand on met le fil en tension, à la limite de sa rupture, la surface du liant ne doit pas se fissurer.

Il existe donc un besoin de développer des alternatives à ces liants, afin notamment d'assurer la tenue des grains abrasifs sur l'âme d'un fil abrasif mais également le contrôle de l'usure et de la dégradation du liant. Tel est le problème technique que propose de résoudre la présente invention.

### EXPOSE DE L'INVENTION

Les Demandeurs ont mis au point un fil à la surface duquel des particules abrasives sont maintenues au moyen d'un liant à base de fer.

Le fil selon l'invention comprend un liant à base de fer, ce qui permet notamment d'éviter les potentiels problèmes de cancers et d'allergies des liants comprenant une forte teneur en nickel, lors de leur fabrication, ou de leur usage.

Plus précisément, l'objet de la présente invention concerne un fil abrasif comprenant une âme en acier et un revêtement composite externe comprenant un liant et des particules abrasives, ledit liant étant constitué d'au moins une couche en alliage de fer contenant, en poids par rapport au poids du liant :
- entre 0 et 3% d'oxygène, avantageusement entre 0 et 2% ; et
- entre 0.3 et 9% d'au moins un élément choisi dans le groupe comprenant le carbone, le bore et le phosphore.

Comme déjà indiqué, le liant permet de maintenir les particules abrasives à la périphérie de l'âme en acier. Ainsi, les particules abrasives ne présentent essentiellement pas de degré de liberté sur ladite âme. De manière avantageuse, les particules ne présentent aucun degré de liberté sur l'âme en acier, notamment lors de l'utilisation du fil abrasif selon l'invention.

En effet, le liant en alliage de fer confère une meilleure tenue des particules sur l'âme par rapport aux liants en résine de l'art antérieur. Il présente des propriétés de dureté et de résistance à l'abrasion permettant de maintenir plus efficacement les particules en place, même lors de l'utilisation du fil dans des opérations de découpe.

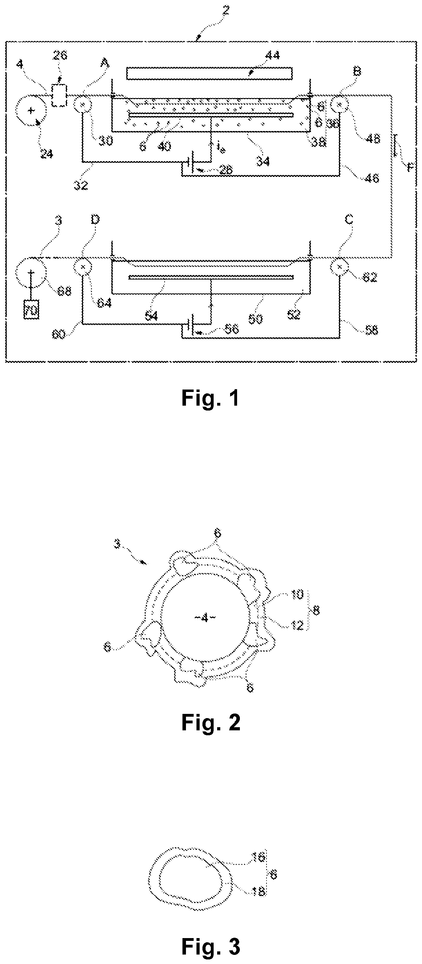

Les particules abrasives peuvent être en contact direct avec l'âme en acier, mais elles peuvent également être, de manière avantageuse, séparées de l'âme par une fine couche de liant. C'est notamment le cas lorsque le procédé représenté par la figure 1 est mis en oeuvre.

Le liant recouvre au moins partiellement les particules abrasives.

Selon un mode de réalisation particulier, le revêtement externe composite comprend au moins une couche supplémentaire de liant en un alliage de fer selon l'invention. Le liant peut donc se présenter sous la forme d'une couche unique ou d'une multitude de couches, avantageusement deux couches.

Ces couches de liant peuvent être constituées d'alliages de fer différents les uns des autres.

Par « couche » on comprend une enveloppe du fil, de composition homogène. Ainsi, deux couches se distinguent l'une de l'autre par leur différence de composition chimique, ou par la présence d'abrasif dans l'une d'elles seulement.

La première couche de liant, en contact avec l'âme en acier, peut présenter une dureté supérieure à celle de la, ou des couches supplémentaires afin d'assurer le maintien des particules abrasives sur le fil.

En revanche, la ou les couches supplémentaires de liant (couche(s) externe(s)) sont avantageusement très résistantes à la corrosion et à la fissuration. De manière avantageuse, elles ne sont pas fragiles, et présentent des propriétés de ductilité supérieures aux couches inférieures.

Ainsi, selon un mode de réalisation particulier, le fil abrasif comprend une âme en acier et un revêtement composite externe comprenant un liant et des particules abrasives. Le liant est dans ce cas particulier constitué de deux couches de liant en alliage de fer selon l'invention. La deuxième couche de liant qui recouvre la première couche de liant adjacente à l'âme en acier, est en un alliage de fer présentant des propriétés de résistance à l'abrasion et/ou à la corrosion, supérieures.

De manière générale, la dureté du liant en alliage fer peut être améliorée par introduction de carbone et/ou de phosphore.

Le bore permet de limiter la quantité d'oxygène comprise dans l'alliage. En effet, les Demandeurs ont découvert que la présence de plus de 3% en poids d'oxygène dans un alliage à base de fer le fragilise. L'addition de bore et/ou de phosphore permet de limiter l'oxygène pouvant être incorporé dans l'alliage à base de fer lors de son électrodéposition.

L'addition de phosphore permet d'améliorer les propriétés de résistance à la corrosion.

Ainsi, selon un mode de réalisation particulier, l'alliage de fer peut contenir de 0.5 à 1.5 % en poids de carbone, de préférence 1%

Selon un autre mode de réalisation particulier, l'alliage de fer comprend entre 0.3 et 1% en poids de bore, de préférence 0.5%

Selon un autre mode de réalisation particulier, l'alliage de fer comprend entre 1 et 9 % en poids de phosphore, de préférence 4%

Le liant, qu'il soit monocouche ou multicouche, peut notamment être obtenu par dépôts électrolytiques successifs d'alliages de fer.

Selon un autre mode de réalisation particulier, l'alliage de fer peut comprendre au moins 97% en poids de fer, et moins de 1 % en poids de nickel et/ou moins de 1% en poids de cobalt. En effet, l'addition de nickel ou de cobalt dans le fer électrodéposé peut poser des problèmes techniques de stabilisation de leurs concentrations.

Comme déjà dit, l'alliage de fer selon l'invention comprend entre 0.3 et 9% d'au moins un élément choisi dans le groupe comprenant le carbone, le bore et le phosphore. Lorsqu'il comprend plusieurs de ces éléments, la teneur totale en carbone, bore et phosphore est avantageusement comprise entre 0.3 et 9%.

L'alliage constituant chacune des couches de liant présente avantageusement une dureté, exprimée en Vickers (Hv), comprise entre 300 et 900 Hv, avantageusement 600 Hv.

La dureté d'une couche de métal liant est mesurée à l'aide d'un micro-duromètre selon les techniques faisant partie des connaissances de l'homme du métier. Un indenteur Vickers est généralement employé, avec une charge compatible avec l'épaisseur de la couche. Cette charge est généralement comprise entre 1 gramme-force et 100 grammes-force. Si l'empreinte laissée par l'indenteur Vickers a une taille trop grosse par rapport à l'épaisseur de la couche (même avec une faible charge), on peut employer un indenteur Knoop (plus étroit), et convertir la valeur de dureté Knoop en dureté Vickers, à l'aide d'une table de conversion.

Les particules abrasives assurant la découpe de matériaux, peuvent notamment être réalisées en un matériau choisi dans le groupe comprenant le carbure de silicium SiC ; la silice SiO₂ ; le carbure de tungstène WC ; le nitrure de silicium Si₃N₄ ; le nitrure de bore BN ; le dioxyde de chrome CrO₂ ; l'oxyde d'aluminium Al₂O₃ ; les diamants ; et les diamants pré-métallisés (par exemple avec du nickel, du cobalt, du cuivre, du fer, ou du titane).

Selon un mode de réalisation particulier, le fil abrasif peut comprendre plusieurs types de particules abrasives distinctes.

L'homme du métier saura choisir la combinaison adéquate liant/particules abrasives en fonction du matériau à découper.

Selon un mode de réalisation particulier, les particules abrasives sont constituées de grains recouverts d'une pellicule, qui est distincte du liant. Cette pellicule recouvre au moins partiellement chaque grain, avantageusement intégralement.

Le diamètre total des particules, c'est-à-dire du grain et le cas échéant de la pellicule, est avantageusement compris entre 1 micromètre et 500 micromètres. Il est préférentiellement inférieur au tiers du diamètre de l'âme en acier. Ainsi, selon un mode de réalisation particulier, le diamètre des particules peut être compris entre 12 et 22 micromètres pour une âme présentant un diamètre de 0.12mm.

Par diamètre, on entend le plus grand diamètre (ou la plus grande dimension) qu'elles présentent lorsqu'elles ne sont pas sphériques.

De manière avantageuse, la pellicule recouvrant le grain est réalisée en un matériau métallique éventuellement ferromagnétique. En outre, le matériau formant la pellicule est avantageusement conducteur électrique.

Il peut notamment s'agir d'une pellicule en un matériau choisi dans le groupe comprenant le fer, le cobalt, le nickel, le cuivre, et le titane.

La pellicule recouvre au moins partiellement les particules abrasives, avantageusement intégralement. Cependant, au cours de l'utilisation du fil abrasif selon l'invention, la partie du grain au contact du matériau à découper est dépourvue de pellicule, celle-ci étant érodée dès les premières opérations de découpe, de la même manière que le liant.

La masse de la pellicule, rapportée à la masse totale des grains revêtus, est avantageusement comprise entre 10% et 60%, notamment dans le cas de grains de diamant.

Cette pellicule peut notamment être déposée sur les grains préalablement à l'utilisation des grains/particules abrasives dans le procédé de fabrication du fil. Les techniques pouvant être mises en oeuvre pour le dépôt d'une pellicule sur chacun des grains incluent notamment la pulvérisation cathodique (« *sputtering* »), mais également l'électrolyse, le dépôt chimique en phase vapeur (CVD de l'anglais « *Chemical Vapor Deposition* »), et le dépôt électrochimique sans courant (« *Electroless Nickel Plating »)*

Généralement, on peut observer que 5 à 50% de la surface du fil abrasif est occupée par des particules abrasives (éventuellement recouvertes d'une couche de liant, quand le fil est neuf).

De manière générale, l'âme en acier du fil abrasif selon l'invention est un fil présentant une section transversale circulaire. Il s'agit d'un fil en acier dont le diamètre est avantageusement compris entre 70 micromètres et 1 millimètre.

L'homme du métier saura adapter le diamètre de l'âme en fonction du matériau devant être découpé. Ainsi, une âme dont le diamètre est compris entre 200 micromètres et 1 millimètre est particulièrement adaptée pour découper des briques de silicium dans des lingots. En revanche, une âme dont le diamètre est compris entre 70 et 200 micromètres est particulièrement adaptée pour découper des wafers de silicium dans des briques.

L'âme du fil abrasif se présente généralement sous la forme d'un fil dont la résistance à la traction est avantageusement supérieure à 2000 ou 3000 MPa, mais généralement, inférieure à 5000 MPa.

D'autre part, l'âme peut présenter un allongement à la rupture, c'est-à-dire l'augmentation de la longueur de l'âme avant que celle-ci ne casse, avantageusement supérieur à 1%, encore plus avantageusement supérieur à 2%. Toutefois, il reste préférentiellement inférieur à 10 ou 5%.

De manière avantageuse, l'âme du fil est en un matériau conducteur électrique, c'est-à-dire un matériau dont la résistivité est inférieure à 10⁻⁵ohm.m à 20°C, et notamment l'acier.

L'âme en acier peut notamment être en un matériau choisi dans le groupe comprenant l'acier au carbone, l'acier inoxydable ferritique, l'acier inoxydable austénitique, et l'acier laitonné. L'acier au carbone contient préférentiellement entre 0.6 et 0.8% en poids de cet élément.

La présente invention concerne également le procédé de fabrication du fil abrasif décrit ci-dessus. Ce procédé comprend notamment les étapes suivantes :
- dépôt électrolytique sur un fil en acier d'un revêtement composite comprenant un liant et des particules abrasives, éventuellement revêtues d'une pellicule métallique, par passage dans un bain (B₁) d'électrolyte comprenant au moins des ions fer II, des particules abrasives, et au moins une source d'au moins un élément choisi dans le groupe comprenant le carbone, le bore, et le phosphore ;
- optionnellement, dépôt électrolytique d'une couche supplémentaire de liant en alliage de fer par passage dans un bain (B₂) d'électrolyte comprenant au moins des ions fer II, et au moins une source d'au moins un élément choisi dans le groupe comprenant le carbone, le bore, et le phosphore.

Les particules abrasives mises en oeuvre sont éventuellement magnétiques.

Bien que des ions Fe III puissent être présents dans le bain, il est préférable de limiter leur concentration, notamment en limitant le contact du bain avec des éléments oxydants, tel l'oxygène atmosphérique. A cet effet, on évitera d'injecter de l'air comprimé pour agiter le bain.

De manière avantageuse, le procédé peut comprendre au moins l'une des étapes suivantes, avant le dépôt électrolytique :
- dégraissage de l'âme en acier en milieu alcalin ;
- décapage de l'âme en acier en milieu acide.

Lorsque ce procédé comprend un deuxième dépôt électrolytique d'alliage de fer, le bain (B₂) peut présenter une composition distincte de celle du bain (B₁). Ce bain est avantageusement dépourvu de particules abrasives.

Le bain B1 produit avantageusement une couche de liant avec une dureté élevée alors que le bain B2 produit avantageusement une couche de liant ductile, c'est-à-dire peu fragile, et avec une bonne résistance à la corrosion.

Comme déjà indiqué, le liant peut comprendre au moins deux couches. La ou les éventuelles couches recouvrant la deuxième couche peuvent être obtenues soit par réitération du passage dans le bain (B₂), soit par passage dans au moins un autre bain électrolytique comprenant des ions Fe II.

Typiquement, les bains (B₁) et (B₂), et le cas échéant les autres bains, comprennent, indépendamment les uns des autres, entre 20 et 100 g/L d'ion Fer II.

D'autre part, le bain (B₁) comprend des particules abrasives, avantageusement entre 1 et 100 g/L.

Comme déjà indiqué, l'alliage de fer constituant le liant contient au moins un élément choisi dans le groupe comprenant le carbone, le bore, le phosphore.

Ainsi, le carbone peut être introduit notamment par addition d'au moins une source de carbone dans le bain d'électrolyte permettant de former le liant. Cette source de carbone peut être choisie dans le groupe comprenant l'acide citrique, l'acide L ascorbique, l'acide succinique, les acides dicarboxyliques à chaine linéaire, et leurs mélanges. Par exemple, on peut utiliser 1.2 g/l d'acide citrique et 3 g/l d'acide ascorbique dans le bain.

Le bore peut être introduit notamment par addition d'au moins une source de bore dans le bain d'électrolyte permettant de former le liant. Cette source de bore peut être choisie dans le groupe comprenant l'acide borique, la diméthylamineborane, et leurs mélanges. Par exemple, on peut utiliser 40 g/l d'acide borique et 1.8 g/l de diméthylamineborane dans le bain.

Le phosphore peut être introduit notamment par addition d'au moins une source de phosphore dans le bain d'électrolyte permettant de former le liant. Cette source de phosphore peut être choisie dans le groupe comprenant l'hypophosphite de sodium, l'acide hypophosphoreux, et leurs mélanges. Par exemple, on peut utiliser 1 à 20 g/l d'hypophosphite de sodium.

En ce qui concerne le cobalt et le nickel, ces métaux peuvent être introduits par addition d'ions Co II et/ou Ni II dans le bain d'électrolyte. Cependant, il peut être difficile de stabiliser les concentrations de nickel et/ou de cobalt dans le liant électrodéposé.

Pour plus de détails sur les étapes du procédé ainsi que le dispositif mis en oeuvre, le lecteur est invité à notamment prendre connaissance de la demande de brevet dont le numéro de dépôt est FR 12 53017.

L'invention concerne également l'utilisation du fil abrasif décrit ci-dessus, pour scier un matériau pouvant notamment être choisi dans le groupe comprenant le silicium, le saphir, et le carbure de silicium. Le fil abrasif peut être mis en oeuvre dans le cadre de la production de wafers de silicium.

L'homme du métier saura adapter le fil abrasif en fonction du matériau à découper. Plus particulièrement, les particules abrasives sont choisies de manière à être plus dures que le matériau à découper.

L'invention et les avantages qui en découlent ressortiront mieux des figures et exemples suivants donnés afin d'illustrer l'invention et non de manière limitative.

### DESCRIPTION DES FIGURES

La figure 1 illustre un dispositif permettant d'obtenir le fil abrasif selon un mode de réalisation particulier l'invention.
La figure 2 illustre une vue en coupe du fil abrasif selon un mode de réalisation particulier de l'invention.
La figure 3 illustre une vue en coupe d'une particule abrasive du fil abrasif selon un mode de réalisation particulier l'invention.

### DESCRIPTION DETAILLEE DE L'INVENTION

Le dispositif (2) illustré par la figure 1 permet de mettre en oeuvre un procédé de dépôt électrolytique sur un fil (4) en acier pour préparer le fil abrasif (3) selon un mode de réalisation particulier de la présente invention.

Le procédé comprend notamment les étapes suivantes :
- déroulement d'un fil (âme) en acier (4) stocké sous la forme d'une bobine (24), selon la direction de la flèche F ;
- optionnellement, dégraissage de l'âme en acier (4) en milieu alcalin ;
- optionnellement, décapage de l'âme en acier (4) en milieu acide ;
- optionnellement, passage de l'âme en acier (4) dans le dispositif d'aimantation (26) qui applique un champ magnétique dont l'intensité est avantageusement supérieure à 800 A/m. L'âme (4) est ainsi aimantée de manière permanente ;
- dépôt électrolytique sur l'âme en acier d'un revêtement composite comprenant un liant et des particules abrasives, par passage dans un bain (B₁) (36) d'électrolyte (38) comprenant au moins des ions fer II, et des particules abrasives (6), et au moins une source d'au moins un élément choisi dans le groupe comprenant le carbone, le bore, et le phosphore ;
- optionnellement, dépôt électrolytique d'une deuxième couche liante par passage dans un bain (B₂) d'électrolyte (52) comprenant au moins des ions fer II, et au moins une source d'au moins un élément choisi dans le groupe comprenant le carbone, le bore, et le phosphore ;
- obtention du fil abrasif (3) ;
- optionnellement stockage du fil abrasif (6), avantageusement sous forme de bobine (68) au moyen d'un moteur (70).

Le dispositif (2) mis en oeuvre comprend une source (28) qui génère un courant d'électrolyse iₑ. La borne positive de la source (28) est reliée à l'électrode (40) située dans le bain (B₁) (36) de l'électrolyte (38) qui est contenu dans le récipient (34). L'électrode (40) est avantageusement constituée de fer pur. La borne négative de la source (28) est reliée aux deux poulies conductrices (30) et (48) positionnées de part et d'autre du récipient (34) via les conducteurs électriques (32) et (46). Les deux poulies conductrices (30) et (48) permettent d'assurer deux points (A) et (B) de contact mécanique avec l'âme en acier (4) qui est ainsi reliée à la borne négative de la source (28).

Le dispositif (2) comprend en option un appareil d'aimantation (44) des particules abrasives (6) et de l'âme en acier (4) une fois celle-ci immergée dans le bain (B₁) (36). Il est positionné au-dessus du bain (B₁) (36).

Les particules abrasives mises en oeuvre sont éventuellement magnétiques afin de permettre un dépôt électrolytique rapide du revêtement composite externe sur l'âme en acier. Elles peuvent ainsi être attirées par l'âme en acier qui est magnétisée au cours de ce procédé.

Comme déjà précisé, les propriétés magnétiques des particules abrasives peuvent notamment provenir d'une pellicule magnétique les recouvrant.

L'âme en acier est ainsi recouverte d'un revêtement constitué de liant et de particules abrasives par dépôt électrolytique lors du passage dans le bain (B₁).

Selon un mode de réalisation particulier, une deuxième couche de liant peut ensuite être déposée sur l'âme en acier, par passage dans le deuxième bain (B₂) (52).

Ce deuxième bain (B₂) (52), qui est contenu dans le récipient (50), comprend un électrolyte. Il est avantageusement dépourvu de particules abrasives.

L'étape de dépôt électrolytique de la deuxième couche de liant consiste notamment à immerger l'âme en acier recouverte d'une première couche de liant et de particules abrasives, dans un bain dans lequel est disposée une électrode (54) reliée à la borne positive d'une deuxième source (56) de courant. L'électrode (54) est avantageusement constituée de fer pur.

La borne négative de la deuxième source (56) de courant est reliée à deux poulies conductrices (62) et (64) situées de part et d'autre du récipient (50) contenant le deuxième bain (B₂) (52) via les deux conducteurs électriques (58) et (60).

Les poulies conductrices (62) et (64) permettent d'assurer la connexion entre l'âme (4) en acier et la borne négative de la deuxième source (56) de courant aux points de contact (C) et (D).

A l'issue du passage dans le deuxième bain d'électrolyte, le fil abrasif (3) est obtenu. Il peut être stocké sous forme de bobine (68).

Comme déjà indiqué, le dispositif (2), et sa mise en oeuvre selon un mode de réalisation particulier, sont décrits plus en détails dans la demande de brevet dont le numéro de dépôt est FR12 53017.

Comme le montre la figure 2, le fil abrasif (3) selon l'invention présente une âme (4) enrobée par une première couche (10) de liant recouvrant partiellement les particules abrasives (6).

Selon ce mode de réalisation particulier, le fil abrasif comprend en outre une deuxième couche (12) de liant recouvrant les particules abrasives (6). Cette deuxième couche de liant est avantageusement plus résistante à la fissuration (c'est-à-dire moins fragile) et plus résistante à la corrosion, que la première couche. Elle peut être moins dure que la première couche (10) recouvrant l'âme en acier (4).

Les deux couches (10) et (12), et les particules abrasives (6) constituent le revêtement composite externe (8) du fil abrasif (3).

Selon un mode de réalisation particulier, la particule abrasive (6) comprend un grain abrasif (16) recouvert d'une pellicule (18) (figure 3). Cette pellicule est avantageusement réalisée en matériau métallique, éventuellement ferromagnétique, afin de faciliter le dépôt électrolytique des particules sur l'âme en acier (4). En effet, le dépôt électrolytique du revêtement composite externe est avantageusement mis en oeuvre en présence de particules recouvertes d'une pellicule métallique, éventuellement ferromagnétique.

### EXEMPLES DE REALISATION DE L'INVENTION

Plusieurs fils abrasifs (exemples 1-6) ont été préparés à partir d'une âme en acier en l'état écroui. L'âme en acier comprend 0.8% de carbone, elle présente un diamètre de 0.12 millimètre.

### Mode opératoire :

Ces fils ont été préparés par dépôt électrolytique dans un premier bain d'électrolyte (B₁) comprenant des particules abrasives, de manière à former un revêtement composite externe sur l'âme en acier. La composition de chacun des éléments est récapitulée dans le tableau 1.

Les particules abrasives employées sont des diamants (de 12 à 22 µm) revêtus de nickel. La masse de nickel constitue 56% de la masse totale des particules abrasives revêtues.

### Exemple 1 : liant à base de fer (Fe)

Les conditions de traitement de l'âme en acier dans le bain (B₁) sont les suivantes :
- densité de courant : 5 A/dm²
- température : 55°C
- anodes : fer pur

Le revêtement à base de fer ainsi obtenu contient environ 5% d'oxygène. Il présente une dureté d'environ 400 Hv.

### Exemple 2 : liant à base de fer et de carbone (Fe + C)

Les conditions de traitement de l'âme en acier dans le bain (B₁) sont identiques à celles de l'exemple 1 à l'exception de la densité de courant et à la présence d'acide citrique et d'acide L ascorbique.

En effet, la teneur en carbone dans le liant augmente avec la densité de courant. En dessous de 0.5 A/dm², la teneur en carbone est inférieure à 0.5%, pourcentage pouvant se révéler insuffisant pour influer sur la dureté du dépôt (liant).

En revanche, lorsque la densité de courant est supérieure à 2 A/dm², la teneur en carbone se stabilise vers 1.5%.

Toutefois, en pratique, la densité de courant est avantageusement inférieure à 2 A/dm². En effet, au-delà de 2 A/dm², le liant présente une teneur en oxygène supérieure à 3% en poids, quantité qui fragilise le dépôt (liant).

Le revêtement à base de fer ainsi obtenu à 1 A/dm² contient environ 1% de carbone, avec environ 2% d'oxygène.

La dureté du dépôt croît de 500 Hv (0.5% de carbone) à 800 Hv (1.5% de carbone).

### Exemple 3 : liant à base de fer et de bore (Fe + B)

Les conditions de traitement de l'âme en acier dans le bain (B₁) sont identiques à celles de l'exemple 1, en présence également d'acide borique et de diméthylamineborane.

Le revêtement ainsi obtenu est composé d'un alliage de fer et de bore (0.3 à 0.7%). Il comprend en outre des traces d'oxygène (<2%).

Sa dureté est d'environ 300 Hv.

Il semble que les additions de bore de 0.3 à 0.7% abaissent la teneur en oxygène du dépôt de fer, et ainsi, qu'elles abaissent la fragilité du métal électrodéposé.

### Exemple 4 : liant à base de fer, de bore et de carbone (Fe + C + B)

Les conditions de traitement de l'âme en acier dans le bain (B₁) sont identiques à celles de l'exemple 1, en présence également d'acide citrique, d'acide L ascorbique, d'acide borique et de diméthylamineborane.

Le revêtement ainsi obtenu est composé d'un alliage de fer, de carbone (1%) et de bore (0.3 à 0.7%), avec des traces (<2%) d'oxygène.
Sa dureté est d'environ 600 Hv
A 5 A/dm², le dépôt n'est pas fragile.

### Exemple 5 : liant à base de fer, et de phosphore (Fe + P)

Les conditions de traitement de l'âme en acier dans le bain (B₁) sont identiques à celles de l'exemple 1, en présence également d'hypophosphite de sodium et éventuellement de sulfate d'aluminium.

La dureté est d'environ 300 Hv pour 1% de phosphore

La dureté est d'environ 900 Hv pour 9% de phosphore

La fragilité est moindre lorsque la teneur en phosphore est comprise entre 1 et 6%. Les dépôts obtenus contiennent entre 1% et 9% de phosphore.

Ils contiennent moins de 3% d'oxygène

Ils se corrodent plus difficilement

Il semble que l'addition de 1% à 9% de phosphore dans le fer électro-déposé abaisse sa teneur en oxygène (donc sa fragilité) et sa sensibilité à la corrosion.

### Exemple 6 : liant à base de fer, de carbone et de phosphore (Fe + C + P)

Les conditions de traitement de l'âme en acier dans le bain (B₁) sont identiques à celles de l'exemple 1, en présence également d'acide citrique, d'acide L ascorbique, d'hypophosphite de sodium et de sulfate d'aluminium.

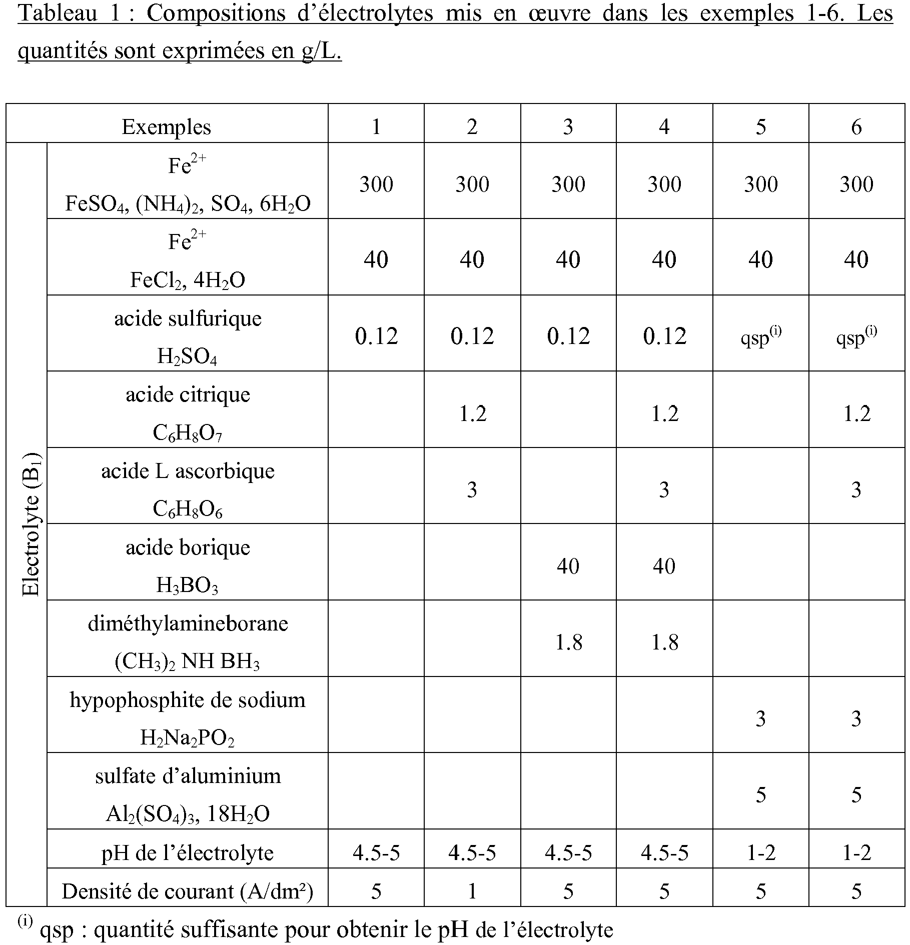

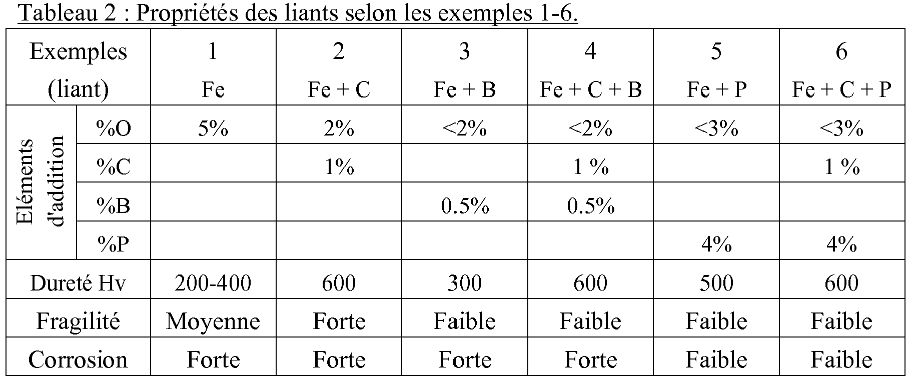

Les pourcentages des éléments d'addition sont exprimés par rapport au poids du liant sur l'âme en acier du fil abrasif.

## Revendications

1. Fil abrasif comprenant une âme en acier et un revêtement comprenant un liant et des particules abrasives, ledit liant étant constitué d'au moins une couche en alliage de fer contenant, en poids par rapport au poids du liant :
- entre 0 et 3% d'oxygène, avantageusement entre 0 et 2% ; et
- entre 0.3% et 9% d'au moins un élément choisi dans le groupe comprenant le carbone, le bore et le phosphore.

2. Fil abrasif selon la revendication 1, ***caractérisé* en ce que** le liant comprend deux couches en alliage de fer contenant, en poids et indépendamment d'une couche à l'autre, entre 0 et 3% d'oxygène, et entre 0.3% et 9% d'au moins un élément choisi dans le groupe comprenant le carbone, le bore et le phosphore.

3. Fil abrasif selon l'une des revendications 1 et 2, ***caractérisé* en ce que** l'alliage de fer comprend entre 0.5 et 1.5 % en poids de carbone.

4. Fil abrasif selon l'une des revendications 1 et 2, ***caractérisé* en ce que** l'alliage de fer comprend entre 0.3 et 1 % en poids de bore.

5. Fil abrasif selon l'une des revendications 1 et 2, ***caractérisé* en ce que** l'alliage de fer comprend entre 1 et 9 % en poids de phosphore.

6. Fil abrasif selon la revendication 1, ***caractérisé* en ce que** l'alliage de fer comprend au moins 97% en poids de fer, et moins de 1 % en poids de nickel et/ou moins de 1% en poids de cobalt.

7. Fil abrasif selon l'une des revendications 1 à 6, ***caractérisé* en ce que** les particules abrasives sont constituées de grains recouverts, au moins en partie, d'une pellicule en un matériau métallique, éventuellement ferromagnétique.

8. Procédé de fabrication d'un fil abrasif objet de l'une des revendications précédentes, selon les étapes suivantes :
- dépôt électrolytique sur un fil en acier d'un revêtement composite comprenant un liant et des particules abrasives éventuellement revêtues d'une pellicule métallique, par passage dans un bain (B₁) d'électrolyte comprenant au moins des ions fer II, des particules abrasives, et au moins une source d'au moins un élément choisi dans le groupe comprenant le carbone, le bore, et le phosphore ;
- optionnellement, dépôt électrolytique d'une couche supplémentaire de liant en alliage de fer par passage dans un bain (B₂) d'électrolyte comprenant au moins des ions fer II, et au moins une source d'au moins un élément choisi dans le groupe comprenant le carbone, le bore, et le phosphore.

9. Procédé de fabrication d'un fil abrasif selon la revendication 8, ***caractérisé* en ce que** les bains (B₁) et (B₂) comprennent, indépendamment l'un de l'autre, entre 20 et 100 g/L d'ions fer II.

10. Utilisation du fil abrasif objet de l'une des revendications 1 à 7, pour scier un matériau choisi dans le groupe comprenant le silicium, le saphir, et le carbure de silicium.

## Patentansprüche

1. Schleif-Sägedraht mit einem Stahlkern und einer Beschichtung, die ein Bindemittel und Schleifpartikel enthält, wobei dieses Bindemittel aus mindestens einer Eisen- Legierung besteht, die nach Gewicht bezogen auf das Gewicht des Bindemittels enthält:
- zwischen 0 und 3% Sauerstoff, noch besser zwischen 0 und 2%; und
- zwischen 0,3% und 9% von mindestens einem Element, das aus der aus Kohlenstoff, Bor und Phosphor bestehenden Gruppe ausgewählt wird.

2. Schleif- Sägedraht gemäß Anspruch 1, ***dadurch gekennzeichnet, dass*** das Bindemittel zwei Schichten aus Eisenlegierung enthält, mit einem Gewichtsanteil, jeder Schicht unabhängig betrachtet, zwischen 0 und 3% Sauerstoff und zwischen 0.3% und 9% mindestens eines Elementes, das aus der aus Kohlenstoff, Bor und Phosphor bestehenden Gruppe ausgewählt wird.

3. Schleif- Sägedraht gemäß Anspruch 1 und 2, ***dadurch gekennzeichnet, dass*** die Eisenlegierung zwischen 0,5 und 1,5 Gewichts-% Kohlenstoff enthält.

4. Schleif- Sägedraht gemäß Anspruch 1 und 2, ***dadurch gekennzeichnet, dass*** die Eisenlegierung zwischen 0,3 und 1,5 Gewichts-% Bor enthält,

5. Schleif- Sägedraht gemäß Anspruch 1 und 2, ***dadurch gekennzeichnet, dass*** die Eisenlegierung zwischen 1 und 9 Gewichts-% Phosphor enthält.

6. Schleif- Sägedraht gemäß Anspruch 1, ***dadurch gekennzeichnet, dass*** die Eisenlegierung mindestens 97 Gewichts-% Eisen, mindestens 1 Gewichts-% Nickel und/ oder mindestens 1 Gewichts-% Kobalt enthält.

7. Schleif- Sägedraht gemäß den Ansprüchen 1 bis 6, ***dadurch gekennzeichnet, dass*** die Schleifpartikel aus Körnchen bestehen, die zumindest teilweise mit einer metallischen, eventuell ferromagnetischen Haut überzogen sind.

8. Verfahren zur Herstellung eines Schleif- Sägedrahtes, nach einem der vorhergehenden Ansprüchen, mit den folgenden Schritten:
- elektrolytische Abscheidung einer Verbundbeschichtung auf einen Stahldraht, die ein Bindemittel und Schleifpartikel enthält, die eventuell mit einer Metallhaut überzogen sind, durch ein Elektrolytbad (B1) mit mindestens Eisen-II-Ionen, Schleifpartikeln und mindestens einer Quelle von mindestens einem Element, das aus der aus Kohlenstoff, Bor und Phosphor bestehenden Gruppe ausgewählt wird ;
- als Option elektrolytische Abscheidung einer zusätzlichen Schicht Bindemittel aus Eisenlegierung durch ein Elektrolytbad (B2) mit mindestens Eisen-II-Ionen und einer Quelle von mindestens einem Element, das aus der aus Kohlenstoff, Bor und Phosphor bestehenden Gruppe ausgewählt wird.

9. Verfahren zur Herstellung eines Schleif- Sägedrahtes, gemäß Anspruch 8, ***dadurch gekennzeichnet, dass*** die Bäder (B1) und (B2) unabhängig voneinander zwischen 20 und 100 g/L Eisen-II- Ionen enthalten.

10. Verwendung des Schleif- Sägedrahtes, der Gegenstand eines der Ansprüche 1 bis 7 ist, zum Sägen eines Materials das aus der aus Silizium, Saphir und Siliziumkarbid bestehenden Gruppe ausgewählt wird.

## Claims

1. An abrasive wire comprising a steel core and a coating comprising a binder and abrasive particles, said binder being formed of at least one iron alloy layer containing, by mass with respect to the binder mass:
- from 0 to 3% of oxygen, advantageously from 0 to 2%; and
- from 0.3% to 9% of at least one element selected from the group comprising carbon, boron, and phosphorus.

2. The abrasive wire of claim 1, ***characterized* in that** the binder comprises two layers of iron alloy containing, by mass and independently from one layer to the other, from 0 to 3% of oxygen, and from 0.3% to 9% of at least one element selected from the group comprising carbon, boron, and phosphorus.

3. The abrasive wire of any of claims 1 and 2, ***characterized* in that** the iron alloy comprises from 0.5 to 1.5 % by mass of carbon.

4. The abrasive wire of any of claims 1 and 2, ***characterized* in that** the iron alloy comprises from 0.3 to 1 % by mass of boron.

5. The abrasive wire of any of claims 1 and 2, ***characterized* in that** the iron alloy comprises from 1 to 9 % by mass of phosphorus.

6. The abrasive wire of claim 1, ***characterized* in that** the iron alloy may comprise at least 97% by mass of iron, and less than 1% by mass of nickel, and/or less than 1% by mass of cobalt.

7. The abrasive wire of any of claims 1 to 6, ***characterized* in that** the abrasive particles are formed of grains at least partly covered with a film made of a metallic material, possibly ferromagnetic.

8. A method of manufacturing the abrasive wire of any of the foregoing claims, according to the steps of:
- electrodeposition on a steel wire of a composite coating comprising a binder and abrasive particles, possibly coated with a metal film by passing in an electrolyte bath (B₁) comprising at least iron II ions, abrasive particles, and at least one source of at least one element selected from the group comprising carbon, boron, and phosphorus;
- optionally, electrodeposition of an additional layer of iron alloy binder by passing in an electrolyte bath (B₂) comprising at least iron II ions, and at least one source of at least one element selected from the group comprising carbon, boron, and phosphorus.

9. The abrasive wire manufacturing method of claim 8, ***characterized* in that** the baths (B₁) and (B₂) comprise, independently from each other, from 20 to 100 g/L of iron II ions.

10. A use of the abrasive wire of any of claims 1 to 7, to saw a material selected from the group comprising silicon, sapphire, and silicon carbide.
